# EUROPÄISCHE PATENTANMELDUNG

(11) **EP 4 489 296 A2**
(43) Veröffentlichungstag der Anmeldung: **08.01.2025**
(21) Anmeldenummer: 24020227.5
(22) Anmeldetag: 04.07.2024
(51) Int. Cl.: H02S 20/26, H02S 40/44, F24S 20/67, F24S 10/75

(54) **MULTIFUNKTIONALE AUSSENFLÄCHEN-GEBÄUDEELEMENTE, DEREN HERSTELLUNG UND VERWENDUNG**

(30) Priorität: 05.07.2023 EP 23020335
(71) Anmelder: Universität Stuttgart, 70174 Stuttgart (DE)
(72) Erfinder: Garrecht, Harald, 70569 Stuttgart (DE)
(74) Vertreter: Pietruk, Claus Peter

(57) **Zusammenfassung**

Die Erfindung betrifft unter anderem ein Verfahren zur Erstellung von Photovoltaik-Thermie-Außenflächen an Gebäuden, wobei vorbereitend metallische, auf gegenüberliegenden Seiten Ausnehmungen aufweisende Trapezprofilelemente (2a) bereitgestellt werden, an denen Fluidrohrleitungen (3) vorbereitet für einen randseitigen Sammelleitunganschluß vormontiert werden. Diese vorbereiteten Trapezprofilelemente (2a) werden mit zum Gebäude hin weisenden Fluidrohrleitungen (3) angebracht, Photovoltaikmodul - Anschlußleitungen werden in die Trapezprofile (2a) verlegt, insbesondere mit vorbereiteten Steckverbindungen, profilierte Photovoltaikmodul-Halter (2b) werden auf den Trapezprofilelementen (2a) angeordnet, die eine quer zu den Ausnehmungen der Trapezprofilelemente (2a) bzw. zu den Fluidrohrleitungen (3) verlaufende Profilierung (2b2) und eine im montierten Zustand über der die elektrischen Anschlußleitungen führenden Ausnehmung angeordnete Durchtrittsöffnung (2b1) aufweisen, die Anschlußleitungen werden soweit durch die Durchtrittsöffnungen (2b1) durchgezogen, dass ein Anschluß von Photovoltaikmodulen möglich ist. Es werden vormontierte Photovoltaik-Module mit einem rückseitigem elektrischen Anschluß vorbereitet, auf dem Photovoltaikmodul-Halter (2b) angeordnet und elektrisch an die Anschlußleitungen angeschlossen, und die elektrischen Anschlußleitungen und die Fluid-Sammelleitunganschluß werden mit der Haustechnik verbunden.

## Beschreibung

Die vorliegende Erfindung betrifft das oberbegrifflich Beanspruchte und bezieht sich somit insbesondere auf Dächer zur Energiegewinnung.

Dächer sollen neben dem dauerhaften Schutz der Gebäudestruktur vor Witterungseinflüssen wie Regen und dergleichen oftmals weitere Funktionen erfüllen, was aktuell insbesondere erfordert, zur Verringerung des Gebäude-Energiebedarfs beizutragen. Dies soll in architektonisch ansprechender Weise und zu akzeptablen Preisen erfolgen.

Um den Energiebedarf eines Gebäudes unter Heranziehung von Dächern zu verringern, sind sowohl photovoltaische als auch solarthermische Anordnungen vorgeschlagen worden. Bei Photovoltaikanordnungen werden Photovoltaikzellen verwendet, um Sonnenlicht zu empfangen und damit Strom zu erzeugen. Solarthermische Anordnungen nützen dagegen die mit der Sonneneinstrahlung einhergehende Erwärmung zur Erhitzung von Fluid, welches wiederum verwendet werden kann, um Warmwasser zu Heiz- oder anderen Nutzzwecken mit geringerem Primärenergieeinsatz bereitzustellen als beim Erhitzen durch fossile Brennstoffe nötig. Die Erwärmung des Warmwassers kann dabei direkt in Wärmetauschern erfolgen, was höhere Vorlauftemperaturen im Wärmefluid erfordert, oder, alternativ, unter Verwendung von Wärmepumpen, insbesondere dann, wenn die Vorlauftemperaturen aufgrund geringer Sonneneinstrahlung während Schlechtwetterperioden oder im Winter gering bleiben.

Die entsprechenden photovoltaischen bzw. solarthermischen Anordnungen können auf bestehende Dächer aufgebracht werden; auf Neubauten oder bei Dachsanierungen können die entsprechenden Anordnungen auch weitere Funktionen übernehmen, ohne dass etwa eine darunter liegende Ziegelhaut vorgesehen werden muss. Überdies ist es möglich, die entsprechenden Anordnungen nicht nur auf Dächern anzuordnen, sondern auch z.B. als Fassadenelemente bzw. z.B. für Grundstücksbegrenzungen zu gestalten, also allgemein als Außenflächen-Gebäudeelemente.

Es ist bereits bekannt, mit ein und demselben Außenflächen-Gebäudeelement sowohl Strom durch Photovoltaikmodule als auch Wärme durch Fluidwärmetauscher zu gewinnen. Vorgeschlagen wurde dafür etwa ein Außenflächen-Gebäudeelement mit einem Gussmaterialgrundkörper, zumindest einem Fluidwärmetauscher und einer Photovoltaikanordnung, wobei der Gussmaterialgrundkörper aus Beton bzw. Mörtel gebildet ist, der zumindest einen Fluidwärmetauscher und eine im Gussmaterialgrundkörper eingegossene Fluidführung umfasst, und wobei der Fluidwärmetauscher relativ zur Photovoltaikanordnung durch ein in dem Gussmaterialgrundkörper eingegossenes Positioniermittel fixiert bzw. positioniert ist.

Verwiesen sei hinsichtlich des bekannten Standes der Technik zunächst auf die EP 2 230 362 A2. Aus der EP 2 230 362 A2 ist ein Abdeck-Element bekannt, das verwendbar sein soll, wenn etwa aus Denkmalschutzgründen die Nachrüstung mit Solarkollektoren verboten oder unerwünscht ist. Unter anderem soll ein Solardachziegel auf seiner Oberseite aus einem transparenten, vorzugsweise weitgehend durchsichtigen Material gefertigt sein, wie schlagfestem oder schlagzähem Kunststoff. Die Oberseite und Unterseite des Dachziegels sollen luftdicht miteinander verbunden werden und im Hohlraum eine thermische Solarkollektoreinheit angeordnet werden.

Die Ausbildung eines Dachsteines mit Hohlraum, der von Luft durchströmt ist, um ihn zu kühlen, ist aus der DE 3314637 bekannt.

Den Gedanken, Dachpfannen als Thermie-Solarkollektoren zu verwenden, kann man der DE 3404978A1 entnehmen.

Die Verbindung eines Dachsteins mit einem Kollektorschlauch ist aus der DE 20 108 106 U1 bekannt.

Aus der EP 2149647A2 ist ein Dachziegel mit einer insbesondere metallischen, witterungsbeständigen Außenhaut bekannt, welche die Deckfläche des Dachziegels zumindest teilweise abdeckt und im Dachverband die Dachhaut mitbildet, und mit einem aus Schaum-Kunststoff bestehenden isolierten Körper zur thermischen Isolation des Dachverbandes, wobei der isolierte Körper an die Außenhaut angeschäumt ist und mit dieser einen mechanischen Verbund bildet, wobei der isolierte Körper auf seiner der Deckfläche abgewandten Seite frei von der witterungsbeständigen Außenhaut ist. Im zentralen Bereich der Deckfläche des Dachsteins kann ein photovoltaisches Element angeordnet sein. Auf seiner zur Deckfläche des Dachziegels gerichteten Seite kann der isolierte Körper eine Wanne bilden, in der wenigstens eine Rohrleitung für eine Flüssigkeit angeordnet ist.

Ein Dachziegel mit Trägerkörper aus wenigstens zwei Schichten ist aus der EP 2336448A2 bekannt. Eine erste Schicht ist mit der Außenhaut und die restlichen Schichten mit der ersten Schicht verwendbar. Die erste Schicht mit der Außenhaut ist vorkonfektioniert und die restlichen Schichten werden nachträglich damit verbunden.

Ein Dachziegel mit Wärmeproduktion und photovoltaischer Energieerzeugung ist aus der WO 2008 / 020462A1 bekannt.

Eine Solardachkonstruktionen, bei der eine Photovoltaikanlage mit Dachelementen aus unter anderem Beton ausgebildet ist und welche Solarzellen aufweist, wobei weiter eine Thermie-Anlage mit Solarkollektoren und einem Rohrleitungssystem verwendet wird, ist aus der DE 2020100161591 bekannt.

Erwähnt sei bezüglich der Assemblierung von Solarzellen etwa die DE 10 2008 047517.

Aus der WO 2008/073905 ist eine Anordnung bekannt, bei der Kühlrippen gegenüberliegende kleinflächigen Photovoltaikmodulen angeordnet sind.

Eine Hinterlüftung von Solarzellen ist auch aus der WO 2010/144118 bekannt.

Eine Solardach-Konstruktion ist gezeigt in DE 10 2010 010 457. Diese schlägt vor eine Solardach- oder Solarfassaden-Konstruktion umfassend eine Photovoltaikanlage mit Dachelementen aus Faserzement, Beton, Ton, Metall, Kunststoff oder ähnlichen Materialien, die reihenweise zueinander versetzt und überlappend angeordnet sind und wobei der nicht überlappende Bereich Solarzellen aufweist, die zur Erzeugung von Strom über Kontaktmittel miteinander elektrisch verbindbar sind und mit einer Thermieanlage mit Solarkollektoren und einem Rohrleitungssystem, in dem ein Wärmeträgermedium zirkuliert, wobei vorgesehen sein soll, dass der nicht überlappende Bereich der Dachelemente je in seiner Gesamtheit von den Solarzellen oder Modulen bedeckt ist, dass die Solarkollektoren der Thermieanlage räumlich im Bereich zwischen ersten Latten zur Befestigung der Dachelemente vorgesehen sind, dass die Solarkollektoren zur Übertragung der Wärmeenergie direkten Kontakt zu den Dachelementen aufweisen und dass die Thermieanlage sowohl die Temperatur der Solarmodule wie auch die der elektrischen Kontaktmittel der Solarmodule steuert.

Es ist, vgl. die nicht vorveröffentlichte, aber durch Bezugnahme hier zu Offenbarungszwecken vollumfänglich eingegliederte, insbesondere betreffend die darin enthaltene Offenbarung zu großflächigen, hybriden Gebäudeelementen mit Metallblechen und zur Latentwärmenutzung einschließlich entsprechender Systeme eingegliederte europäische Anmeldung mit der Anmeldenummer EP23020168.3, auch bereits vorgeschlagen worden, hybride Außenflächen-Gebäudeelemente, also z.B. Dachelemente für simultane Nutzung von Photovoltaik und Solarthermie, als Metalleindeckungen für Dächer auszugestalten und dabei ein Metallblech wie ein Kupferpanel an jenen Längsrändern, die auf dem Dach der Dachsteigung folgen, mit Stehfalzen zu versehen. Dabei wurde erwähnt, dass mit solchen Anordnungen auch historische Kupferblechdächer nachgebildet werden können. Es wurde Bezug genommen auf ein großformatiges Außenflächen-Gebäudeelement, das mit bedrucktem Glas mit keramischem Digitaldruck versehen sein soll, wobei ein spezielles Druckmuster mit nichtwiederholendem Punktraster als wählbar erwähnt wurde, und wobei zwischen die Kupferblechscharen eingelegte großformatige PV-Module rein mechanisch fixiert sein sollen. Zugleich sollen die thermisch und elektrisch aktivierten Systemebenen gekoppelt sein. Es handelt sich dabei ausweislich früherer Angaben um eine Anordnung, bei der die Wärmeleitebene mitsamt einer Wärmetauscherverrohrung von einer insbesondere durch (transparente bzw. teiltransparente) Bedruckung farblich angepasste Glasabdeckung abgedeckt ist, die sich über die gesamte Länge des Panels in voller Breite zwischen den Stehfalzen erstreckt. Zwischen der Glasabdeckung und der Wärmeleitebene mit Wärmetauscher-Verrohrung bzw. Fluidführungsmitteln wie Schläuchen können zudem photovoltaische Elemente angeordnet werden. Diese können gegebenenfalls unmittelbar unterhalb der Glasabdeckung befestigt werden. Es wird aber auch erwähnt, dass die Glasplatte und das Photovoltaikmodul separat bleiben können, wenn etwa eine leichte Austauschbarkeit der Glasabdeckung gewünscht ist, um bei Schadensereignissen wie Hagel hohe Kosten zu vermeiden. Als Metallblech werden z.B. Kupfer oder Aluminium oder verzinktes Blech erwähnt. Weiter sollen zwischen den Stehfalzen die Fluidführungsmittel in Form einer Verrohrung angeordnet sein, wobei zusätzlich Wärmeleitmittel vorgesehen sein sollen, um die Wärme der Gesamtfläche optimal zu nutzen. Als Metallblech sollte gemäß den früheren Angaben Kupfer verwendet werden. Auch wurde für die Verwendung der Paneele vorgeschlagen, dass darunter eine hochdiffusionsoffene, aber schlagregendichte Membran angeordnet sein kann, um eine Beschädigung der Dachkonstruktion durch an den Außenflächen-Gebäudeelementen kondensierendes Wasser zu vermeiden. Bei hinreichend starker mechanischer Ausbildung soll sich so zugleich eine behelfsmäßige Deckung ergeben. Es sei erwähnt, dass dann bevorzugt unter der Membran eine Dämmschicht vorgesehen werden kann, um gute Wärmedämmwerte zu erzielen. Es wurde auch eine entsprechende Anordnung gezeigt, die aber schlecht zu montieren war und deren Wärmeertrag bestenfalls als ungewiss bezeichnet werden kann. Es wird erwähnt, dass derartige Metallpaneele zwar gegebenenfalls keine Turbulenz-fördernde Rauigkeit der Oberfläche aufzuweisen, aber gleichwohl hohe Wärmeerträge erwarten lassen, weil sie - anders als Dachsteine aus Ziegel und Beton - dank fehlenden Überlapps und fehlender wechselseitiger Verschattung - einen sehr großen Teil der Dachfläche für die Energiesammlung nutzbar machen würden; zudem seien sie großflächig herstellbar, gegebenenfalls auch auf einfachste Weise auf Maß; es ist zudem ohne weiteres möglich, sie an beliebige Dachgrößen anzupassen.

Derartige Anordnungen wurden im Kontext von Latentwärmespeichern diskutiert. Dabei wurde erwähnt, dass ein 6 m³ Eisspeichervolumen in Kombination mit einer Kupferblechnachbildung mit einer Fläche von 50 m² auf dem Dach eines an einem Hafen in Norddeutschland befindlichen Gebäudes zu einer Ersparnis von mehr als 50 % des winterlichen Heizwärmebedarfs dieses Gebäudes führen könne, wobei die über die als Außenflächen-Gebäudeelemente bezeichneten Dachelemente gewonnene Umweltwärme genutzt werden kann, und wobei der Eisspeicher gut regeneriert werden kann, wenn eine Sole-Wasser-Wärmepumpe dem Wasser fortwährend Latentwärme durch einen wiederkehrend erzwungenen Gefriervorgang entzieht. Die mit einem Wärmetauscher ausgestatteten Dachelemente sollen sich so nicht nur für eine Gewinnung von direkter Solarwärme bei solarem Energieeintrag, sondern auch für die Gewinnung von Umweltwärme über weitestgehend das ganz Jahr hinweg nutzen lassen. Hierzu werden die Außenflächen-Gebäudeelemente mit einem Eisspeicher gekoppelt, dem die Umweltwärme selbst bei niedrigen Außentemperaturen so zugeführt werden kann, dass die mittels Wärmepumpe durch den Phasenwechsel von flüssig zu fest entzogene Latentwärme zur Regenerierung des Eisspeichers wieder mit der Umweltwärme nachgespeist wird.

Allerdings sind Verbesserungen der entsprechenden Anordnung noch wünschenswert, insbesondere, um bei preiswerter Fertigung die Anwendbarkeit für Latentwärmespeicher weiter zu verbessern.

Vor diesem Hintergrund ist es wünschenswert, eine verbesserte Anordnung bereitzustellen, die bei gewährleistet hohem Wärmeertrag besonders preiswert und einfach zu montieren ist.

Die Aufgabe der vorliegenden Erfindung besteht darin, Neues für die gewerbliche Anwendung bereitzustellen.

Die Lösung dieser Aufgabe wird in unabhängiger Form beansprucht. Einige der bevorzugten Ausführungsformen ergeben sich aus den abhängigen Ansprüchen; andere bevorzugte Ausführungsformen ergeben sich aus der Gesamtheit der Unterlagen.

Die Erfindung schlägt somit in einem ersten Grundgedanken unter anderem ein Verfahren zur Erstellung von Photovoltaik-Thermie- Außenflächen an Gebäuden mit den Schritten vor, dass vorbereitend metallische Trapezprofilelemente, die bevorzugt ungleich breite Trapezflächen mit auf einer Seite breiteren Ausnehmungen und mit auf der gegenüberliegenden Seite schmaleren Ausnehmungen aufweisen, bereitgestellt werden, an den bereitgestellten Trapezprofilelementen Fluidrohrleitungen in den zwischen den schmaleren Flächen gebildeten breiteren Ausnehmungen vormontiert und für einen Fluid-Sammelleitungsanschluß am Trapezprofilelement-Rand vorbereitet werden, die vorbereiteten metallischen Trapezprofilelemente mit zum Gebäude hin weisenden Fluidrohrleitungen angebracht werden, insbesondere unter Verwendung einer Durchtrittsöffnung wie einer Durchbohrung der Trapezprofilelemente an den schmaleren Flächen, Photovoltaikmodul - Anschlußleitungen in den schmaleren, nach außen weisenden Ausnehmungen verlegt werden, insbesondere mit vorbereiteten Steckverbindungen für den Photovoltaikmodul-Anschluß, profilierte Photovoltaikmodul-Halter auf den Trapezprofilelementen befestigt werden, die eine quer zu den Ausnehmungen der Trapezprofilelemente und Fluidrohrleitungen verlaufenden Profilierung und eine im montierten Zustand über der die zugeordnete Anschlußleitung führenden Ausnehmung angeordnete Durchtrittsöffnung aufweisen, die Anschlußleitungen soweit durch die Durchtrittsöffnung durchgezogen werden, dass ein Anschluß von Photovoltaikmodulen möglich ist, vormontierte Photovoltaik-Module mit einem rückseitigen elektrischen Anschluß vorbereitetet und dann auf dem Photovoltaikmodul-Halter angeordnet und elektrisch an die Anschlußleitungen angeschlossen werden, und die elektrischen Anschlußleitungen und die Fluid-Sammelleitungsanschluß mit der Haustechnik verbunden werden. Erwähnt sei diesbezüglich, dass der Fluid-Sammelleitungsanschluß nicht unmittelbar neben jedem Trapezprofil angeordnet werden braucht, sondern bei großflächigen Anordnungen auch eine Weiterführung bis zu den Rändern der großflächigen Anordnung möglich ist.

Die beschriebene Anordnung erlaubt einerseits in ganz erheblichem Umfang eine Vormontage von kritischen und in der Fertigstellung zeitintensiven Komponenten. Dies wiederum ermöglicht es, viele der besonders zeitintensiven Schritte nicht auf einem Gebäudedach durchführen zu müssen, sondern in einer industriellen, insbesondere robotergestützten oder wenigstens manufakturartigen Vorfertigung. Dies entlastet Dachdecker, die auf dem Dach weniger und weniger komplexe Montagearbeiten durchführen müssen und ermöglicht damit eine insgesamt preiswertere Fertigung, die insbesondere maschinell unterstützt werden kann. So erlaubt die Vormontage der Fluidleitungen in den später dachseitigen Trapezprofilausnehmungen z.B. das schnelle Anbringen der Trapezprofile auf einem Dach, da die schmalen, nach außen sich erweiternden schmaleren Ausnehmungen ohne Gefährdung der Fluidleitungen durchbohrt werden können. Gegebenenfalls lassen sich dort sogar Befestigungslöcher bevorzugt ebenfalls vorbohren oder vorstanzen; wo etwa ein Dachbalkenabstand nicht klar ist, können auch Lochreihen oder Langlöcher bzw. Langlochreihen z.B. durch Stanzen, preiswert vorbereitet werden. Zudem ist auch die Verlegung der elektrischen Leitungen nach Trapezprofilmontage sehr schnell möglich und es können sogar ohne Probleme vorgefertigte Anschlußkabelstränge verlegt werden, nachdem die Trapezprofile am Gebäude, insbesondere oberhalb von etwa diffusionsoffenen, aber wasserundurchlässigen Folien, angebracht wurden. Wo diese aufgrund ungeeigneter Dachneigung aus dem Trapezprofil vor Montage der Photovoltaikmodul-Halter herausfallen würden, können geeignete Rückhaltemittel am Trapezblech vorgesehen werden. Damit wird auch der elektrische Anschluss der Photovoltaik-Module unkompliziert.

Obwohl demgemäß eine besonders einfache, schnelle und preiswerte Montage der Anordnung gewährleistet ist, genügt die fertige Anordnung handwerklich bekannten und akzeptierten Verlegetechniken. Insbesondere ist es möglich, die Bleche so zu verlegen, dass sie schwimmend verlegt und nur an First bzw. First und Traufe durch ein Querblech gesichert werden. Dabei bedarf es keiner Verschraubung der Kupferbleche auf dem Untergrund respektive lediglich jeweils nur einer einzelnen Schraube zur Sicherung. Eine gerade bei Kupfer besonders große Wärmeausdehnung ist damit unproblematisch. Bei einer solchen Montageweise ist es zudem möglich, nicht nur die Bleche einer sich vom Traufe zum First erstreckenden Spalte von Kupferblechen sicher miteinander zu verbinden, sondern dabei auch die Photovoltaikmodule an den Kupferblechen zu fixieren. Dazu werden die Photovoltaikmodule bevorzugt so lang sein, dass sie sich nahezu vollständig entlang des jeweiligen Kupferbleches erstrecken. Die (traufseitigen) Unterkanten der Photovoltaik-module können traufseitig in einer an jedem Blech der Spalte traufseitig gebildeten Rinne umfasst werden, während die Oberkanten der Photovoltaikmodule durch ein jeweiliges Halteblech, das zwischen zwei in der Spalte mit einer kleinen Lücke dazwischen übereinander folgende Bleche eingeschoben wird und die firstseitige Oberkante des Photovoltaikmoduls übergreift, fixiert werden; für das firstnächste Photovoltaikmodul ist eine vergleichbare Fixierung durch ein Halteblech möglich, das nicht zwischen zwei Blechen der Spalte, sondern auf andere Weise befestigt wird. Damit ist das Photovoltaikmodul an einer freien Bewegung von First zu Traufe oder umgekehrt sicher gehindert; wird die Quer-Bewegung beispielsweise durch dicht neben dem seitlichen Photovoltaikmodule angeordnete, beispielsweise durch Falzkanten an der sich von der Traufe zum First erstreckenden Spalte von Kupferblechen gebildete, seitliche Stege einer Höhe verhindert, die mindestens der Dicke der Photovoltaikmodule entspricht, wird zugleich verhindert, dass Wind- auch bei Turbulenzen in der Anströmung - an den Photovoltaikmodulen so angreifen kann, dass diese abgehoben werden.

Damit die Bleche sicher mit den darunter liegenden, die Fluidleitungen aufweisenden Trapezprofilen verbunden werden können, werden auf den Trapezprofilen entweder vorab schon in einer Vorfertigung Fixierungen wie Winkel angeordnet oder aber es werden zumindest für deren Montage entsprechende Löcher bei der Vorfertigung vorgesehen. Dies kann auf den breiteren Flächen geschehen; eine Vorfertigung der entsprechenden Löcher verhindert, dass auf der Baustelle Fluidleitungen beschädigt werden und beschleunigt das Arbeiten, insbesondere, wenn in den Trapezflächen geeignete Gewinde vorgesehen werden. So ist eine schnelle Montage gewährleistet.

Auch die Photovoltaikmodule werden bevorzugt zu größeren, in der Regel und bevorzugt planaren Einheiten verbunden und dann für den Anschluß vorbereitet. Die Größe der Photovoltaikmodule ist bevorzugt so, dass sie in einer Richtung seitlich bis dicht an die Stege zwischen seitlich benachbarten Blechen reichen und in der anderen, nach Montage von Traufe zu First verlaufenden Richtung etwa der Länge der Kupferbleche entsprechen, bevorzugt nur knapp, um besser fixierbar zu sein. "Knapp" bedeutet hier, dass die Länge der Photovoltaikmodule etwas geringer ist, z.B. ein bis drei Zentimeter bei einer Gesamtlänge entlang der Richtung von Traufe zu First zwischen z.B. 80cm bis 2m, so dass sie von Halteblechen besser übergriffen werden können.

So braucht auf der Baustelle nur noch die Montage vorbereitet werden, etwa durch Bereitstellung geeigneter Halter und Heranführen der Haustechnik-Anschlußleitungen an die Gebäudeaußenfläche; die nachfolgenden Schritte der Trapezprofil- Befestigung, der Kabelverlegung, der Photovoltaikmodul-Halter-Anbringung und der Montage der Photovoltaikmodule greifen dann alle auf vorgefertigte Komponenten zurück; da diese zugleich, vor allem bei den bevorzugten Ausführungen der Photovoltaikmodul-Halterungen, auch dank der zu einander quer verlaufenden und damit gemeinsam stabilisierenden Profilierung jeweils noch relativ leicht sind, sind für ein Dach gegebener Größe überdies jeweils nur wenige große, aber gleichwohl leichte Komponenten erforderlich, was die Montagezeit weiter senkt. Als leicht werden vorliegend Komponten angesehen, wenn sie gut handhabbar sind, weil sie insbesondere von einer Person oder maximal zwei Personen von einem auf der richtigen Höhe wie einem Dach angelegten (Zwischen-)Vorrat an den Ort des Einbaus ohne maschinelle Hilfe gebraucht werden können. Das ist z.B. dann der Fall, wenn die Module manuell gehoben werden können, also z.B. unter 25kg wiegen, bevorzugt unter 20kg.

Die vorgefertigten Photovoltaik-Module umfassen typisch eine Reihe zusammengeschalteter Photovoltaikelemente, die auf einem für eine einfache Handhabung hinreichend stabilen Träger angeordnet und elektrisch leitend miteinander und mit einem rückseitig zugänglichen Anschluß verbunden sind. Frontseitig ist eine Abdeckung vorhanden, die hinreichend witterungsbeständig ist, also sowohl frost-, hitze- als auch insbesondere UV-beständig ist; besonders geeignet sind dünne Glasschichten, wie sie etwa auch zum Schutz von Smartphone-Displays eingesetzt werden. Beispielsweise können Glasabdeckungen mit 0,1mm Dicke verwendet werden, was einen hinreichenden Schutz vor Feuchtigkeit usw. bietet, aber nur zu einer geringen Gewichtszunahme beiträgt. Derartige Glasfront-Elemente haben den Vorteil, dass sie gut bedruckt werden können, insbesondere mit sogenannten keramischen Druckverfahren, also Verfahren, bei denen die Druckfarbe nach Aufbringen eingebrannt wird. Derartige keramische Drucke sind besonders stabil und insbesondere auch ohne weiteres UV-beständig. Durch die Verwendung herkömmlicher Druckverfahren bei der Aufbringung der Farbe, etwa mittels Siebdruck oder Farbflüssigkeitsstrahltechniken (d.h. z.B. mit geeigneten Tintenstrahldruckern), sind feine Muster druckbar, insbesondere in Form von Druckfarben-Punktwolken, die so entworfen sind, dass sie in typischen Betrachtungsabständen zu Dächern wie etwa bei mehr als 10m Betrachtungsabstand wie ein einheitlich durchgängiger Druck aussehen. Damit kann der Eindruck eines durchgängig gefärbten Glases bereits bei einer Lichtabsorption erzeugt werden, die im niedrigen einstelligen Bereich, beispielsweise bei 2% liegt. Um ein Eindringen von Feuchtigkeit zu vermeiden, können die Photovoltaikelemente umkapselt sein, was beispielsweise durch Laminieren erreicht werden kann. Dabei kann der Träger der Photovoltaikmodule mit einer oberseitigen Abdeckung verbunden werden, beispielsweise unmittelbar durch Verschweißen bzw. besagtes Laminieren.

Auch ist die Anordnung besonders günstig im Betrieb. Da die Fluidleitungen den Photovoltaikmodulen unmittelbar gegenüber liegen, ist es besonders hilfreich, wenn sie auf besonders gut wärmeleitende Weise, etwa durch Aufschweissen, Auflöten und/oder Verkleben mit und unter Metallfolien mit dem Trapezblech verbunden werden. Dies verbessert gegenüber bekannten Anordnungen den Wärmefluss, was vor allem dort hilfreich ist, wo Latentwärme bei nur langsamer Gebäudeanströmung effizient genutzt werden soll, was aber auch allgemein bei starker Sonneneinstrahlung zu einer Verringerung der Photovoltaikmodultemperaturen und damit zu einem höheren Wirkungsgrad beiträgt. Erwähnt sei, dass die Effizienz mindernde, durch Sonneneinstrahlung bedingte, typisch Erwärmung der die Photovoltaikmodule bei Auflage der Photovoltaikmodulträger auf breiteren Trapezflächen verbessert wird; das ist einer der Gründe, weshalb die Verwendung von Trapezprofilen mit ungleich breiten Trapezflächen bzw. Ausnehmungen bevorzugt ist.

Das Dach hat zudem eine hohe Beständigkeit selbst bei Extrembedingungen wie etwa Sturm. So verhindern die Stehfalze, dass die ja bevorzugt großflächigen Photovoltaikmodule durch starke seitliche Winde angehoben werden.

Die Anordnung ist demnach in einem Bruchteil der zuvor benötigten Zeit montierbar, kostengünstiger herstellbar und besonders dauerhaft.

Schutz wird auch beansprucht für ein Außenflächen-Gebäudeelement aufweisend zumindest ein Photovoltaikmodul, zumindest eine Fluidrohranordnung, und zumindest eine profilierte, metallische Trägerstruktur, wobei zumindest ein Element der profilierten, metallischen Trägerstruktur ein Trapezprofil besitzt, das so mit ungleich breiten Trapezflächen gebildet ist, dass die breiteren Flächen für die Photovoltaikmodulauflage und die schmaleren Flächen für die gebäudeseitige Befestigung verwendbar sind, wobei die Fluidrohranordnung an den breiteren Flächen vormontiert und im montierten Zustand dem Photovoltaikmodul gebäudeseitig (d.h. oftmals und in der Regel dachseitig) gegenüberliegend angeordnet ist.

Die Trapezprofilstruktur wird bevorzugt aus witterungsbeständigen Metallen wie Aluminium, insbesondere eloxiertem Aluminium hergestellt. Wo die Photovoltaikmodul-Halter aus thermischen Gründen oder aus Gründen des Denkmalschutzes aus Kupferblechen hergestellt werden, kann zur Vermeidung galvanischer Elemente ebenfalls Kupfer verwendet werden respektive evtl. Kunststoff.

Es ist vorteilhaft, wenn bei einem Außenflächen-Gebäudeelement bzw. einer Außenflächen-Gebäudeelement-Anordnung wie vorliegend beschrieben das Photovoltaikmodul rückseitig verkabelt ist und Anschlußleitungen in den schmaleren Ausnehmungen des Trapezprofils aufgenommen sind. Wie erläutert, lässt sich die Montage so besonders schnell bewerkstelligen.

Es ist auch vorteilhaft, wenn bei einem Außenflächen-Gebäudeelement bzw. einer Außenflächen-Gebäudeelement-Anordnung wie vorliegend beschrieben die profilierte, metallische Trägerstruktur mit übereinander angeordneten Blechen gebildet ist, wobei das die Fluidohranordnung tragende Trapezprofilblech dachseitig (bzw. allgemeiner: gebäudeseitig, also zu dem Gebäude hinweisend) angebracht ist und für die Aufnahme der Photovoltaikmodule Photovoltaikmodul-Blechträger auf dem Trapezprofilblech befestigt sind. Es sei darauf hingewiesen, dass bereits die Verlegung der zur profilierten, metallischen Trägerstruktur gehörenden Trapezprofile einen ganz erheblichen vorläufigen Schutz der darunter liegenden Gebäude- bzw. Dachstruktur bewirkt, etwa gegen Hagel, was bei mehrtätigen Montagearbeiten auf besonders großflächigen Dächern vorteilhaft sein kann.

Es ist weiter vorteilhaft, wenn bei einem Außenflächen-Gebäudeelement bzw. einer Außenflächen-Gebäudeelement-Anordnung wie vorliegend beschrieben die Photovoltaikmodul-Blechträger Stehfalze aufweisen, die höher sind als die Photovoltaikmodule, insbesondere nur um nicht mehr als 20mm, insbesondere bevorzugt um nicht mehr als 10mm höher. Dies gewährleistet noch gute Montierbarkeit und hohe Stabilität ohne übermäßige Angriffsflächen zu bieten. Es wurde bereits erwähnt, dass dies die Sicherheit erhöht. Zudem können entsprechend große Stehfalze besser miteinander verbunden werden.

Es sei demgemäß als vorteilhaft offenbart, wenn bei einem Außenflächen-Gebäudeelement bzw. einer Außenflächen-Gebäudeelement-Anordnung wie vorliegend beschrieben, die in den Spalten nebeneinander angeordneten, eine Reihe bildenden Photovoltaikmodul-Blechträger an den Stehfalzen miteinander verbunden sind. Die in einer Spalte übereinander von Traufe zu First angeordneten Photovoltaikmodul-Blechträger können durch Übergangsstücke miteinander verbunden werden, die an den Falzen vom oberen Bereich eines traufseitigen zu einem unteren Bereich eines firstseitigen Photovoltaikmodul-Blechträgers verlaufen.

Es ist vorteilhaft, wenn bei einem Außenflächen-Gebäudeelement bzw. einer Außenflächen-Gebäudeelement-Anordnung wie vorliegend beschrieben die Photovoltaikmodul-Blechträger aus Kupfer gebildet sind, weil damit die Wärmeabfuhr besser ist. Dies ist auch im Hinblick auf das typisch für Fluidrohre verwendete Kupfermaterial sinnvoll, um galvanische Effekte zu vermeiden. Alternativ sind aber auch andere hinreichend korrosionsfeste oder witterungsbeständige Materialien wie z.B. Aluminium oder Edelstahl verwendbar.

Es ist vorteilhaft, wenn bei einem Außenflächen-Gebäudeelement bzw. einer Außenflächen-Gebäudeelement-Anordnung wie vorliegend beschrieben seitlich der Trapezbleche, d.h. insbesondere an deren seitlichen Rand, Sammelleitungen für Fluid und/oder Strom vorgesehen sind. Dabei können z.B. an einem seitlichen Rand eine oder mehrere Fluidzuleitungen und am anderen seitlichen Rand eines Trapezbleches Fluidableitungen angeordnet sein. Ein seitlicher Anschluß erlaubt eine Heranführung der Haustechnik an das hybride, also Photvoltaik und Thermie ausnutzende und somit multifunktionale Außenflächen-Gebäudeelement auf besonders einfach zu planende Weise, die im Idealfall eine Individualiserung von vorgefertigten Komponenten erübrigt.

Ebenso ist vorteilhaft, wenn das Außenflächen-Gebäudeelement bzw. die Außenflächen-Gebäudeelement-Anordnung wie vorliegend beschrieben, auf einem Gebäude, auf einem Dach und/oder als Teil eines Daches angeordnet ist. Als Dachformen, für die die erfindungsgemäße Anordnung verwendbar ist, seien insbesondere erwähnt Satteldächer, Pultdächer, Zeltdächer, Walmdächer, Schleppdächer, Mansarddächer und, soweit eine bloße Annäherung an die gebogene Form ausreicht oder Mehrkosten für die Verwendung von gebogenen Elementen akzeptiert werden, auch Tonnendächer. Die Erfindung ist auch auf Garagen- und Carportdächern einsetzbar sowie auf Flachdächern, wobei erforderlichenfalls über eine Zwischenstruktur eine leichte Neigung der erfindungsgemäßen Elemente erzielt werden sollte, um Probleme mit auf den Elementen stehenbleibenden Niederschlägen zu verhindern.

Besonders vorteilhaft ist bei Verwendung auf Dächern mit an sich herkömmlichen Ziegeln und dergl., dass die Außenseiten der Photovoltaikmodule mit langlebigen Mustern versehen werden können, wie diese durch keramischen Druck erzeugbar sind, also mittels Druckverfahren, bei denen die Druckfarbe eingebrannt wird. Derartige sog. keramische Drucke sind besonders stabil und insbesondere auch ohne weiteres UV-beständig. Durch die Verwendung herkömmlicher Druckverfahren bei der Aufbringung der Farbe, etwa mittels Siebdruck oder Farbflüssigkeits- (tinten-)strahltechniken, sind feine Muster druckbar, insbesondere in Form von Druckfarben-Punktwolken, die so entworfen sind werden, dass sie in typischen Betrachtungsabständen zu Dächern wie etwa bei mehr als 10m Betrachtungsabstand wie ein einheitlich durchgängiger Druck aussehen. Damit kann der Eindruck eines durchgängig gefärbten Glases bereits bei einer Lichtabsorption erzeugt werden, die im niedrigen einstelligen Bereich, beispielsweise bei 2% liegt. Das Glas kann zudem so bedruckt werden, dass es nicht nur vom Farbton her dem Material eines jeweiligen Daches entspricht, sondern auch eine bestimmte Struktur zu haben scheint, wie es etwa bei Schiefer der Fall ist. Das ist insbesondere dort der Fall, wo der optische Eindruck möglichst wenig von einem herkömmlich gedeckten Dach abweichen soll, etwa in bestimmten Denkmalschutzobjekten. Dass sich dabei Farbtöne erreichen lassen, die nicht nur Ziegeldächern entsprechen, sondern auch beispielsweise die Farbe von (Patina aufweisenden) Kupferdächern erreicht werden kann, sei erwähnt.

Auch ist vorteilhaft, wenn bei einem Außenflächen-Gebäudeelement, wie es vorliegend beschrieben wird, die Fluidleitungen in thermisch besonders gut leitender Weise an den Trapezblechen montiert sind, insbesondere aufgeschweisst, aufgelötet und/oder unter Metallfolien verklebt sind. Auf diese Weise kann der Wärmeübergang in die Fluidleitungen verbessert werden.

Die Erfindung wird im Folgenden nur beispielhaft anhand der Zeichnung beschrieben. In dieser ist dargestellt durch:
- Fig. 1: metallische Trapezprofilelemente, die partiell mit Photovoltaikmodul-Haltern versehen sind;
- Fig. 2: die zum Gebäude weisende (Unter-) Seite der metallischen Trapezprofilelemente mit daran geführten Fluidleitungen und die Zusammenführung für eine seitliche Fluidsammelleitung;
- Fig. 3: die Verbindung von Photovoltaikmodul-Haltern an den Stehfalzen während einer Montage;
- Fig. 4: Querschnitt durch die wie in Fig. 3 gezeigt an den Stehfalzen miteinander verbundenen Bleche;
- Fig. 5: zwischen traufen- und firstnahen Blechträgern anzuordnendes, gekantetes Blech;

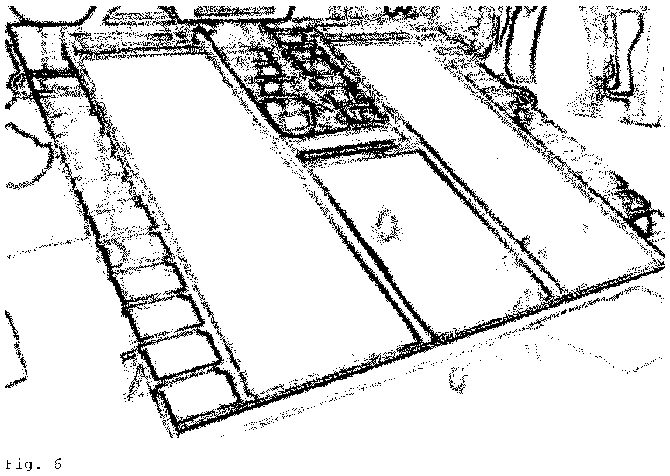

- Fig. 6: eine Anordnung nach dem Stand der Technik.

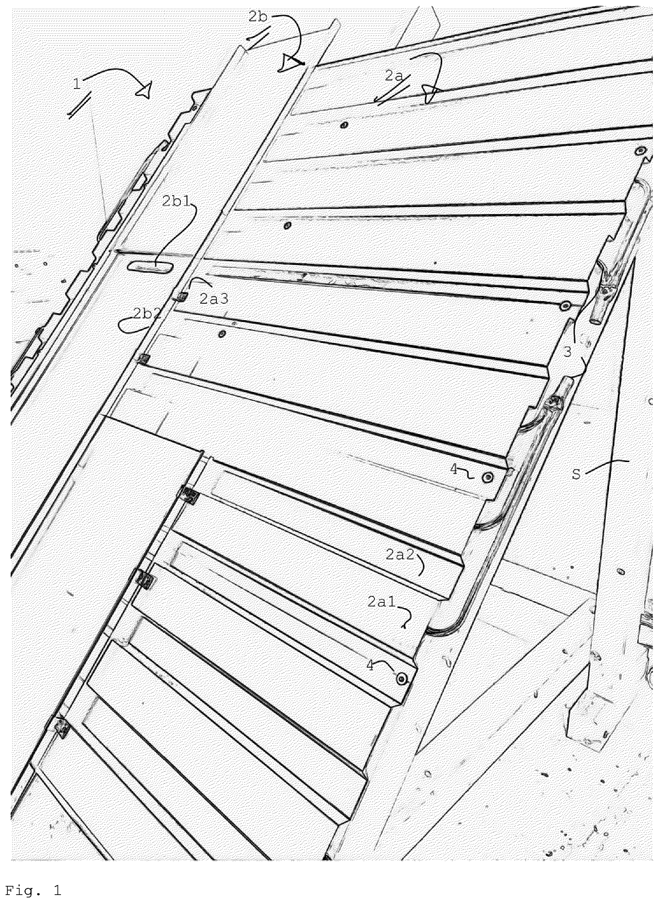

In Fig. 1 ist ein Ständer S gezeigt, auf dem für eine allgemein mit 1 bezeichnetes Außenflächen-Gebäudeelement-Anordnung 1 eine profilierte, metallische Trägerstruktur 2 für mehrere in der Darstellung noch nicht montierte Photovoltaikmodule und für eine in der Darstellung an der Seite der Trägerstruktur hervorstehende Fluidohranordnung 3 angeordnet ist, wobei ein unteres Element 2a der profilierten, metallischen Trägerstruktur 2 ein Trapezprofil besitzt, das mit ungleich breiten Trapezflächen 2a1, 2a2 gebildet ist, die im montierten Zustand derart angeordnet sind, dass die breiteren Flächen 2a1 für die Photovoltaikmodulauflage und die schmaleren Flächen 2a2 für die gebäudeseitige Befestigung verwendbar sind, und wobei die Fluidrohranordnung 3 an den breiteren Flächen 2a1 vormontiert und im montierten Zustand dachseitig dem Photovoltaikmodul gegenüberliegend angeordnet ist.

Es wird einsichtig sein, dass anstelle eines z.B. zu Schulungszwecken in geschlossenen Räumen verwendbaren Ständers S in der praktischen Anwendung einsichtiger Weise ein Dachstuhl anstelle des dargestellten Grundgerüstes verwendet werden wird; demgemäß ist der Ständer S wie ein solcher geformt.

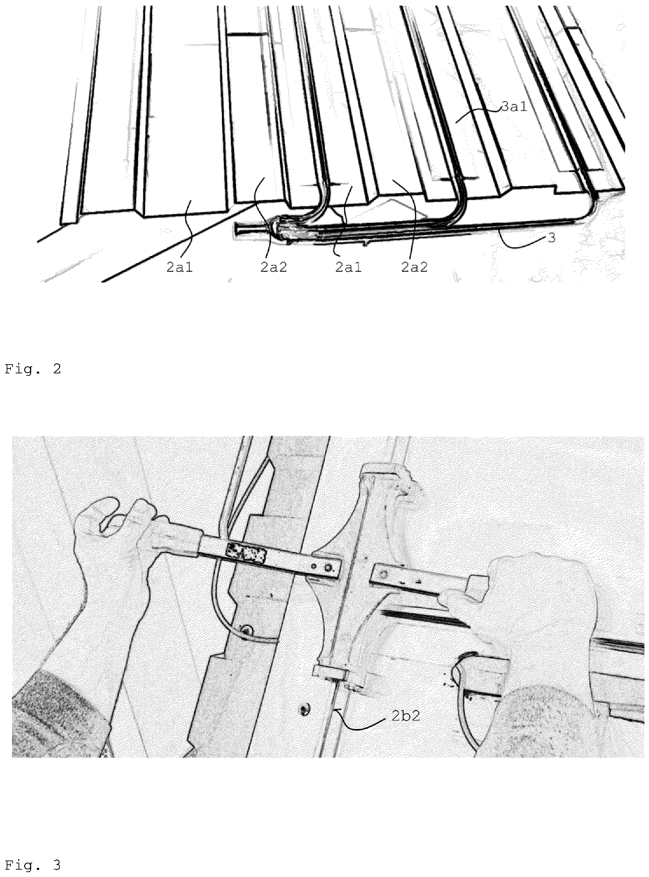

Wie in Fig. 2 dargestellt, ist die Fluidrohranordnung 3 so gebildet, dass sie etwa mittig und im Gebrauch gebäudeseitig auf den breiten Trapezflächen 2a1 angeordnet ist. Dabei ist in jeder einer Reihe der parallelen breiten Trapezflächen ein Fluidrohr angeordnet und diese Fluidrohre 3 sind seitlich für einen Sammelleitungsanschluss verbunden. Die Fluidrohre sind am Trapezprofil mit flächig beidseits seitlich längs der Rohre auf dem Trapezprofil aufliegenden metallischen Blechen (vgl. 3a1, Fig. 2) befestigt, was die Wärmeverbindung zwischen Trapezprofil und Fluidrohr verbessert.

Die Trapezprofile sind so tief profiliert (d.h. die Ausnehmungen, die durch die Trapezprofilierung gebildet sind, sind so tief), und zugleich so breit, dass die Fluidrohre des gewünschten Durchmessers problemfrei vollständig mitsamt Befestigungsmitteln aufgenommen werden können. Damit sind zugleich die schmaleren Ausnehmungen 2a2 so tief gebildet, dass die elektrischen Anschlussleitungen und insbesondere wasserdichte Steckverbinder für die Photovoltaikmodule und evtl. Sensoren wie Temperatursensoren oder dergl. darin ohne weiteres aufgenommen werden können. Derartige Sensoren sind bei der Latentwärmenutzung hilfreich. Es sei erwähnt, dass bei sehr großen Dächern, insbesondere Dächern mit sehr großem Abstand von First zu Traufe, mehrere Photovoltaikmodule entlang einer Spalte angeordnet werden können und dementsprechend mehrere Ausnehmungen elektrische Anschlußleitungen führen können. Das Einlegen von Anschlußleitungen ist im Übrigen dadurch erleichtert, dass sich die entsprechende Ausnehmung nach außen öffnet. Weiter sei erwähnt, dass gegebenenfalls Sensoren und dergl. in einer separaten Ausnehmung angeordnet werden können. Zudem sei erwähnt, dass auch mehrere Temperatursensoren und/oder Feuchtesensoren auf einem Dach angeordnet werden können, z.B. um Ausfallsicherheit durch Redundanz zu gewährleisten, eine Mittelung zu erlauben usw.

Die schmaleren Ausnehmungen sind dabei noch so breit gebildet, dass es ohne weiteres möglich ist, sie mit geringem handwerklichem Aufwand und allenfalls minimalem erforderlichem Geschick auf einem Dachbalken, einer Gebäudewand oder dergl. anzuschrauben, wie durch die in Fig. 1 erkennbaren Schrauben 4 beispielhaft gezeigt. In bevorzugten Ausführungsformen können die Trapezprofile dafür vorbereitete Löcher, insbesondere Langlöcher aufweisen, die eine gewisse Wärmeausdehnung zulassen.

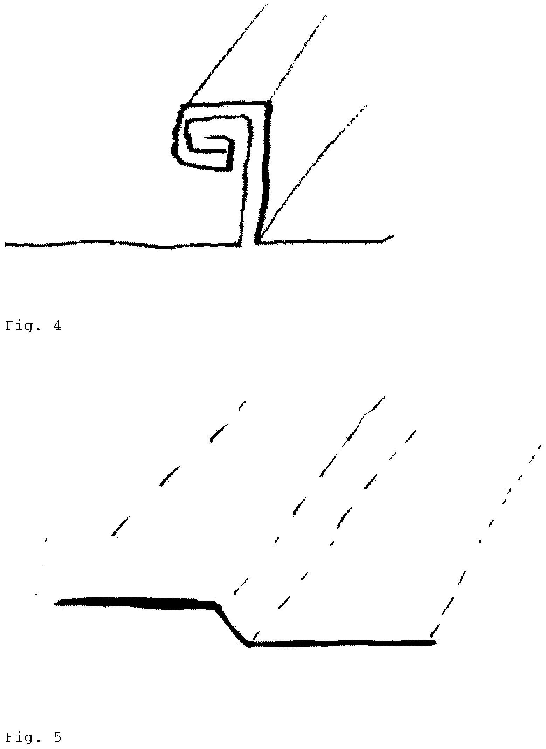

Als weiterer Teil der profilierten metallischen Trägerstruktur 2 sind auf dem unteren Element 2a Photovoltaikmodul - Blechträger 2b befestigt, die weg vom Dach weisende und quer zu den Trapezstrukturen verlaufende Stehfalze 2b2 aufweisen. Dargestellt ist in Fig. 1 die bevorzugte Befestigung mit die Stehfalze übergreifenden Winkeln 2a3, die selbst auf dem unteren Element 2a vorbereitet angeschraubt oder wie hier aufgenietet sind. In der in Fig. 1 gezeigten Anordnung ist das untere Element nur teilweise mit Photovoltaikmodul-Blechträgern belegt, um die darunter liegenden Strukturen besser beschreiben zu können; in der Praxis wird das untere TrapezprofilElement aber vollflächig mit Photovoltaikmodul-Blechträgern 2b belegt sein. Die Falze sind im Querschnitt in Fig.4 dargestellt, wobei zu erkennen ist, wie die Bleche miteinander verbunden sind. Die Photovoltaikmodul-Blechträger 2b liegen flächig auf den breiten Trapezflächen auf und sind somit in gut wärmeleitender Verbindung damit. In einer bevorzugten Variante bestehen sowohl die Trapezprofile als auch die Photovoltaikmodul -Blechträger 2b aus Kupferblechen; alternative Materialien wie Aluminium, Edelstahl und dergl. sind aber ebenfalls verwendbar.

Die Photovoltaikmodul-Blechträger 2b sind zur Aufnahme von großflächigen, vorgefertigten Photovoltaikmodulen bestimmt und dimensioniert. Diese Photovoltaikmodule sind zuvor rückseitig mit elektrischen Anschlüssen versehen worden, die bei der Montage auf dem Dach nur noch mit einer Anschlußleitung zu verbinden sind. Einsichtiger Weise wird die Stelle, an der die elektrischen Anschlüsse an den Photovoltaikmodul-Rückseiten vorgesehen sind, dem Photovoltaikmodul-Blechträger 2b angepasst sein.

Jeder Photovoltaikmodul -Blechträger 2b weist in seinem unteren Bereich eine Abstützung bzw. mechanische Fixierung (nicht gezeigt) für ein Photovoltaik-Modul auf, so dass das Photovoltaik-Modul für die Montage dort aufgesetzt werden kann, um es rückseitig mit den Anschlußleitungen zu verbinden, bevor das Photovoltaik-Modul fest am Photovoltaikmodul -Blechträger 2b angebracht wird.

Für die Zuführung der elektrischen Anschlußleitungen zu den Photovoltaikmodulen weist jeder Photovoltaikmodul -Blechträger 2b Durchbrüche 2b1 gegenüberliegend der die elektrischen Anschlußleitung(en) führenden schmaleren Ausnehmung des Trapezprofils auf, wobei diese Durchbrüche 2b1 so dimensioniert sind, dass die zuvor in den Ausnehmungen abgelegten elektrischen Anschlußleitungen nach Montage der Photovoltaikmodul - Blechträger 2b zunächst leicht soweit durch die Durchbrüche 2b1 gezogen werden können und die herausgezogene Leitung mit den Anschlußsteckern nach Anschluß eines Photovoltaikmoduls wieder ohne Schwierigkeiten durch die Durchbrüche 2b1 in die schmaleren Ausnehmungen gelegt bzw. zurückgezogen werden kann. Der Durchbruch 2b1 ist bevorzugt wie in Figur 1 zu erkennen, so nahe am oberen (firstseitigeren) Ende der Photovoltaikmodul -Blechträger 2b angeordnet, dass das Photovoltaikmodul bei der Montage um seine Unterkante hinreichend weit weg vom Photovoltaikmodul -Blechträger weg geschwenkt werden kann, so dass genügend Platz vorhanden ist, um den Anschlußstecker mit der Anschlußleitung zu verbinden.

Die einzulegenden Photovoltaikmodule sind zudem nur so dick, dass die Stehfalze 2b2 höher sind als die dazwischen liegenden Photovoltaikmodule, um die Photovoltaikmodule bei seitlicher Windanströmung vor übermäßigem Kraftangriff zu schützen. Die Photovoltaikmodule liegen nach ihrer Montage flach auf den Photovoltaikmodul -Blechträgern 2b auf. Es wird einsichtig sein, dass die tatsächliche Dicke der Module von der jeweils aktuellen Photovoltaiktechnik abhängt, aber in der Regel eine Dicke von nicht mehr als z.B. 2cm weit ausreichend sein wird.

Wie in Fig. 1 erkennbar, sind Photovoltaikmodul -Blechträger einerseits nebeneinander angeordnet, wobei sie an den Stehfalzen 2b2 wie in Fig. 3 gezeigt, verbunden sind. Die Photovoltaikmodul -Blechträger sind weiter reihen- und spaltenweise so angeordnet, dass ein in der Spalte unterer - also traufseitiger - Photovoltaikmodul -Blechträger an den in der Spalte darüber - also giebelseitig - angeordneten Photovoltaikmodul - Blechträger angrenzt. Dabei wird aber eine geringe Lücke zwischen den Photovoltaikmodul -Blechträgern belassen, in welche nach Anordnung des Photovoltaikmoduls in einem Photovoltaikmodul -Blechträger ein das Photovoltaikmodul fixierendes, geeignet gekantetes Blech (Fig. 5) eingeschoben werden kann. Damit ist das Photovoltaikmodul am Photovoltaikmodul -Blechträger rein mechanisch zu befestigen und damit gut auszutauschen. Zudem werden die Elemente so miteinander verbunden, dass die jeweilige Wärmeausdehnung der einzelnen Teile unterschiedlich sein kann; dies ist der praktisch schwimmenden Verlegung zu verdanken.

Die Anordnung wird montiert wie folgt:
Zunächst erfolgt die Vormontage der einzelnen, auf der Baustelle zu montierenden Komponenten. Dies geschieht in einer industriellen Umgebung, also einer Fertigungshalle oder dergl. mit entsprechenden Maschinen.

Wie in Fig. 2 dargestellt, ist die Fluidrohranordnung 3 so gebildet, dass sie mittig und (nach Montage der vorbereiteten Einheiten) gebäudeseitig liegen, wozu sie auf der breiten Ausnehmung der Trapezflächen angeordnet sind. Dafür werden zunächst die Fluidrohre auf der breiten, später gebäudeseitigen Trapezausnehmung eines Trapezbleches gut wärmeleitend befestigt, was in einem Fertigungsbetrieb entfernt von einer Baustelle geschehen kann. zur Verbesserung der Wärmeleitung können sie zB mit einer gut wärmeleitenden Folie überzogen werden.

Weiter werden bei der Vormontage im Fertigungsbetrieb, also in einer industriellen Umgebung, bereits Bohrungen in die Trapezbleche eingebracht und die Fluidrohrleitungen werden seitlich zusammengeführt und dort miteinander verbunden, was den späteren Montageaufwand vor Ort verringert. Es werden, wie bevorzugt und möglich, vorliegend auch Anschlußstutzen an der Zusammenführung vorbereitet. Ebenfalls vormontiert werden separate elektrische Anschlußleitungen für die Photovoltaikmodule, was nach Maß geschehen kann. Zudem werden die Photovoltaikmodul-Blechträger und großflächige Photovoltaik-Module vorproduziert.

Die Photovoltaikmodule werden auf der im Betrieb außen liegenden Oberfläche mit einer Keramikdruck-Glasoberfläche aus dünnem Glas versehen, wobei der Keramikdruck so an das Dach, für das die Photovoltaikmodule bestimmt sind, angepasst ist, dass sich aus einer für Dächer üblichen Betrachtungsentfernung von z.B. 10m oder darüber hinsichtlich Farbe und Struktur ein Eindruck wie durch das umgebende Dach ergibt, so dass sich die Anordnung nicht oder nur minimal gegenüber dem restlichen Dach optisch abhebt. Dies kann durch eine Keramikbedruckung mit Punkten bzw. Punktwolken auf den Dächern erreicht werden. Diese Punkte bzw. Punktwolken sind so entworfen, dass sie sich nicht wiederholen, was es erlaubt, die menschlichen Wahrnehmung bezüglich Strukturen und Farben zu täuschen, ohne das Photovoltaikmodul in großem Umfang zu verschatten. Insbesondere der Eindruck von Kupferdächern in den diversen Farben (mit und ohne Patina) ist sehr gut zu reproduzieren.

Es versteht sich im Übrigen, dass die seitlich neben den Pho horizontale Ausrichtung der Ausnehmungsrichtung möglich wäre.

Die vorbereiteten Elemente werden dann an die Baustelle verbracht.

Dort wird auf dem Dachstuhl eine gegenüber flüssigem Wasser dichte Unterdeckung befestigt, die diffusionsgängig ist.

Die Trapezbleche werden mit den daran vormontierten Fluidleitungen auf der Dachgrundkonstruktion angebracht, z.B. angeschraubt. Die Schrauben werden dabei durch die schmalen Trapezflächen bzw. genauer die darin vorbereiteten Durchführungen geführt. Die entsprechenden Durchtrittslöcher der Befestigung und die Befestigung selbst kann so ausgebildet sein, dass eine Wärmeausdehnung der Trapezbleche dauerhaft keine Probleme verursacht. Das Trapezprofil kann im Übrigen mit ganz leichter horizontaler Neigung verlegt werden, damit kein Wasser darin stehen bleibt, sondern zur Seite läuft.

Danach werden die vorbereiteten elektrischen Anschlussleitungen in die schmalen Ausnehmungen gelegt.

Die Photovoltaikmodul -Blechträger werden nun auf den Trapezblechen angeordnet. Dazu müssen die einzelnen Photovoltaikmodul -Blechträger selbst jeweils trauf- und firstseitig gesichert werden, was entsprechend handwerklichen Verlegetechnologien schwimmend möglich ist. Dass durch die aufgelegten Blechträger die in die Trapezausnehmungen gelegten Leitungen überdeckt und somit geschützt werden, sei erwähnt.

Danach werden die Anschlussleitungen soweit durch die Durchbrüche in den Photovoltaikmodul-Blechträger gezogen, dass der elektrische Anschluss der Photovoltaikmodule in einem nachfolgenden Schritt gut möglich ist.

Dann werden die Photovoltaikmodul- Blechträger an den Stehfalzen miteinander verbunden, was durch Umfalzen geschieht, vgl. Fig. 3, und die Photovoltaikmodule werden nacheinander auf die Photovoltaikmodul-Blechträger aufgesetzt und elektrisch mit den zuvor verlegten Anschlußleitungen verbunden. Nachfolgend werden die Photovoltaikmodule vollständig zwischen den Stehfalzen abgelegt und mechanisch fixiert. Dabei sind sie traufseitig gegen Herabrutschen durch die Kupferbleche und deren Umbiegung gehindert. Seitlich dienen die Stehfalze zur Fixierung, so dass die Photovoltaikmodule nur noch jeweils firstseitig fixiert werden müssen.

Zu diesem Zweck wird - wie in Fig. 5 dargestellt - das gekantete Blech in die zwischen trauf- und firstseitigen Blechträgern belassene Lücke so eingeschoben, dass das eine Ende über die firstseitige Kante des Photovoltaikmoduls ragt und dieses fixiert. Dabei sind die Blechträger selbst zwar schwimmend, aber - wie in Fig. 5 im Querschnitt dargestellt- gleichwohl sicher miteinander insbesondere durch die Falze der in einer Reihe nebeneinander angeordneten Blechträger verbunden und first- und traufseitig gemeinsam gesichert.

Es müssen danach nur noch in einem abschließenden Schritt die Verbindungen der seitlich neben die Trapezprofilelemente geführten Anschlüsse mit der Haustechnik erfolgen und die Anordnung ist fertig gestellt. Dass die Verbindungsbereiche zu den Haustechnik-Anschlüssen in üblicher und per se bekannter Weise vor Witterung geschützt werden, sei erwähnt.

Es ergibt sich eine preiswerte und auch für Latentwärme hervorragend nutzbare hybride Außenflächen-Gebäudeelement-Anordnung. Mit anderen Worten ist die Anordnung hervorragend dafür geeignet, Latentwärme aufzunehmen, die bei der Taubildung (Kondensation von Luftfeuchtigkeit auf der Anordnung) frei wird. Hier sind die metallischen Flächen, die gute thermische Leitfähigkeit und die rückseitig gut wärmeleitend angebrachten Fluidleitungen von Vorteil.

## Patentansprüche

1. Verfahren zur Erstellung von Photovoltaik-Thermie-Flächen, insbesondere als Photovoltaik-Thermie-Außenflächen an Gebäuden,
mit den Schritten, dass
vorbereitend
metallische,
auf gegenüberliegenden Seiten Ausnehmungen aufweisende Trapezprofilelemente bereitgestellt werden,
an den bereitgestellten Trapezprofilelementen
Fluidrohrleitungen
in den auf einer ersten Seite der Trapezprofilelemente gebildeten Ausnehmungen
vormontiert
und
für einen Fluid-Sammelleitunganschluß am Trapezprofilelement-Rand vorbereitet werden,
die vorbereiteten metallischen Trapezprofilelemente mit zum Gebäude hin weisenden Fluidrohrleitungen angebracht werden, insbesondere unter Durchdringung der Trapezprofilelemente mit Anbringungselementen an den Flächen der fluidrohrleitungsfreien Ausnehmungen,
Photovoltaikmodul - Anschlußleitungen in den fluidrohrleitungsfreien Ausnehmungen verlegt werden,
insbesondere mit vorbereiteten Steckverbindungen für den Photovoltaikmodul-Anschluß,
profilierte Photovoltaikmodul-Halter auf den Trapezprofilelementen angeordnet werden,
die
eine
quer zu den Ausnehmungen der Trapezprofilelemente bzw. zu den Fluidrohrleitungen verlaufende
Profilierung
und
eine
im montierten Zustand über der die elektrischen Anschlußleitungen führenden Ausnehmung angeordnete Durchtrittsöffnung
aufweisen,
die Anschlußleitungen soweit durch die Durchtrittsöffnungen durchgezogen werden, dass ein Anschluß von Photovoltaikmodulen möglich ist,
vormontierte Photovoltaik-Module mit einem rückseitigem elektrischen Anschluß vorbereitet, auf dem Photovoltaikmodul-Halter angeordnet und elektrisch an die Anschlußleitungen angeschlossen werden,
und die elektrischen Anschlußleitungen und die Fluid-Sammelleitunganschluß mit der Haustechnik verbunden werden.

2. Verfahren zur Erstellung von Photovoltaik-Thermie-Flächen nach dem vorhergehenden Anspruch, worin bei der vorbereitenden Bereitstellung von metallischen, auf gegenüberliegenden Seiten Ausnehmungen aufweisenden Trapezprofilelementen die auf gegenüberliegenden Seiten liegenden Ausnehmungen unterschiedlich breit sind, und die Fluidrohrleitungen in den Ausnehmungen angeordnet werden, die breiter sind als die fluidrohrleitungsfreien Ausnehmungen.

3. Vorgefertigtes Außenflächen-Gebäudeelement aufweisend
eine Trageseite für zumindest ein Photovoltaikmodul, zumindest eine Fluidrohranordnung,
und
zumindest eine profilierte, metallische Trägerstruktur,
wobei
zumindest ein Element der profilierten, metallischen Trägerstruktur ein Trapezprofil besitzt, das so mit ungleich breiten Trapezflächen gebildet ist, dass die breiteren Flächen für die Photovoltaikmodulauflage und die schmaleren Flächen für die gebäudeseitige Befestigung verwendbar sind,
**dadurch gekennzeichnet, dass**
die Fluidrohranordnung in den breiteren Auflageflächen entsprechenden Ausnehmungen des Trapezprofils vormontiert sind, die im montierten Zustand zur Gebäudeaußenfläche weisend, insbesondere zum Dach hin weisend, angeordnet werden.

4. Außenflächen-Gebäudeelement-Anordnung mit einem vorgefertigten Außenflächen-Gebäudeelement nach dem vorhergehenden Anspruch und zumindest einem Photovoltaikmodul,
**dadurch gekennzeichnet, dass**
das Photovoltaikmodul rückseitig verkabelt ist und Anschlußleitungen in den sich weg von der Gebäudeaußenfläche, insbesondere dem Dach erweiternden, schmaleren Ausnehmungen des Trapezprofils aufgenommen sind.

5. Außenflächen-Gebäudeelement-Anordnung nach Anspruch 4, **dadurch gekennzeichnet, dass** die profilierte, metallische Trägerstruktur mit übereinander angeordneten Blechen gebildet ist, wobei zumindest ein vorgefertigtes Außenflächen-Gebäudeelement als die Fluidrohranordnung tragendes Trapezprofilblech gebäudeseitig, insbesondere dachseitig, angebracht ist und wobei für die Aufnahme der Photovoltaikmodule Photovoltaikmodul-Blechträger auf dem Trapezprofilblech befestigt sind.

6. Außenflächen-Gebäudeelement-Anordnung nach dem vorhergehenden Anspruch, **dadurch gekennzeichnet, dass** die Photovoltaikmodul - Blechträger Stehfalze aufweisen, die höher sind als die Photovoltaikmodule, insbesondere nur um nicht mehr als 20mm höher, bevorzugt nicht mehr als 10mm höher.

7. Außenflächen-Gebäudeelement-Anordnung nach dem vorhergehenden Anspruch, **dadurch gekennzeichnet, dass** die Photovoltaikmodul-Blechträger an den Stehfalze miteinander verbunden sind.

8. Außenflächen-Gebäudeelement-Anordnung nach einem der Ansprüche 4 bis 6, **dadurch gekennzeichnet, dass** die Photovoltaikmodul-Blechträger aus Kupfer gebildet sind.

9. Außenflächen-Gebäudeelement-Anordnung nach einem der Ansprüche 4 bis 8, **dadurch gekennzeichnet, dass** seitlich der Trapezbleche Sammelleitungen für Fluid und/oder Strom vorgesehen sind.

10. Außenflächen-Gebäudeelement-Anordnung nach einem der Ansprüche 4 bis 9, **dadurch gekennzeichnet, dass** es auf einem Gebäude auf einem Dach oder als Teil eines Daches angeordnet ist.

11. Außenflächen-Gebäudeelement-Anordnung nach einem der Ansprüche 4 bis 10, **dadurch gekennzeichnet, dass** die Fluidleitungen in thermisch leitender Weise an den Trapezblechen montiert sind, insbesondere aufgeschweisst, aufgelötet und/oder unter Metallfolien verklebt sind.
